# EUROPÄISCHE PATENTSCHRIFT

(11) **EP 0 563 543 B1**
(45) Veröffentlichungstag und Bekanntmachung des Hinweises auf die Patenterteilung: **28.08.1996**
(21) Anmeldenummer: 93101880.8
(22) Anmeldetag: 06.02.1993
(51) Int. Cl.: H02M 7/10

(54) **Elektronenstrahl-Vorrichtung**
Electron beam device
Dispositif à faisceau d'électron

(30) Priorität: 28.03.1992 DE 4210294
(43) Veröffentlichungstag der Anmeldung: 06.10.1993
(73) Patentinhaber: THOMCAST AG, 5300 Turgi (CH)
(72) Erfinder: Mathews, Hans-Günter,Dr., CH-5422 Oberehrendingen (CH); Schminke, Wolfram, Dr., W-7887 Laufenburg (DE)
(74) Vertreter: Ottow, Jens M., Dr.

(56) Entgegenhaltungen:
- EP-A- 0 134 505
- FR-A- 1 590 167
- GB-A- 824 921
- US-A- 4 277 721
- INTERNATIONAL ELECTRON DEVICES MEETING, WASHINGTON, D.C., 6-9/12/87; TECHNICAL DIGEST Seiten 157 - 159 E. W. MCCUNE 'Klystron performance using a multistage depressed collector'
- PATENT ABSTRACTS OF JAPAN vol. 7, no. 13 (E-153)19. Januar 1983 & JP-A-57170441
- PATENT ABSTRACTS OF JAPAN vol. 5, no. 205 (E-088)25. Dezember 1981 & JP-A- 56 123 647

## Beschreibung

### TECHNISCHES GEBIET

Die vorliegende Erfindung betrifft eine Elektronenstrahl-Vorrichtung, umfassend
(a) eine sich auf einem Kathodenpotential befindende Kathode, in welcher ein sich entlang einer Strahlachse ausbreitender Hochleistungs-Elektronenstrahl erzeugt wird;
(b) eine in Richtung der Strahlachse hinter der Kathode angeordnete Anode, welche sich auf einem gegenüber dem Kathodenpotential erhöhten Anodenpotential befindet und die Elektronen des Elektronenstrahls beschleunigt;
(c) einen in Richtung der Strahlachse hinter der Anode angeordneten Kollektor zur Abbremsung des Elektronenstrahls, welcher Kollektor sich auf einem gegenüber dem Anodenpotential abgesenkten Kollektorpotential befindet;
(d) eine Speisung zur Bereitstellung der einzelnen Potentiale für die Kathode, Anode und den Kollektor;
(e) wobei der Kollektor mehrere in Richtung der Strahlachse hintereinander angeordnete Kollektorstufen umfasst, welche sich jeweils auf einem stufenweise abgesenkten Potential befinden.

Eine solche Elektronenstrahlvorrichtung ist z.B. aus der Druckschrift "International Electron Devices Meeting", Washington D.C., 6-9/12/1987; Technical Digest, S.157-159, bekannt. Weiterhin ist eine Elektronenstrahl-Vorrichtung in Form eines Quasi-optischen Gyrotrons mit "depressed collector" aus dem Artikel von H.-G. Mathews, J. de Physique, Colloque C1, supplément au n°1, Tome 50, Januar 1989, S.C1-643 bis C1-658 bekannt (siehe insbesondere die dortige Fig. 11).

### STAND DER TECHNIK

Speisungen für Hochleistungs-Gyrotronröhren, wie sie beispielsweise für die Plasmaaufheizung in Plasma-Fusionsexperimenten (ECRH = Electron Cyclotron Resonance Heating) verwendet werden, arbeiten derzeit vorwiegend mit einem System aus Hochspannungstransformator, Gleichrichter, Röhrenmodulator und Kondensatorbank. Zum Schutz der Gyrotronröhre sind weiterhin als Crowbar eine Serieschaltung von Ignitrons eingesetzt, welche die im System gespeicherte Energie begrenzt bzw. vernichtet. Als Schalt- und Regelröhre hat sich dabei eine Hochleistungs-Tetrode bewehrt, wie sie z.B. von der Firma Asea Brown Boveri AG unter der Typenbezeichnung CQK 200-4 im Handel angeboten wird.

Heute übliche Gyrotronröhren wie z.B. der ebenfalls von der Asea Brown Boveri AG hergestellte und angebotene Typ GT 92-5p arbeiten mit Kathodenspannungen bis -90 kV und Strömen bis 50 A, die von der Speisung zur Verfügung gestellt werden müssen. Auch werden vereinzelt Speisungen eingesetzt, die bis zu 3 Gyrotronröhren gleichzeitig versorgen.

Zur Sperrung bzw. Durchschaltung der Gyrotronröhre findet in Stand der Technik ein separater Niederleistungs-Röhrenmodulator Verwendung, der die Hilfs- oder Modulationsanode bezüglich dem Kathodenpotential zwischen 0 und ca. +30 kV schaltet. Gyrotronröhren ohne Hilfsanode sind ebenfalls im Einsatz, wobei hier die Modulation durch die Schaltgeschwindigkeit des Hochleistungs-Kathodenmodulators begrenzt ist.

Gyrotronröhren der nächsten Generation werden zur Erhö- hung des Wirkungsgrades mit einem in der zweiten eingangs genannten Druckschrift beschriebenen sogenannten "depressed collector" ausgerüstet, der gegenüber der Anode im Potential abgesenkt ist und als Elektronenauffänger die Elektronen des Hochleistungs-Elektronenstrahls vor seiner Vernichtung abbremst.

Wünschenswert ist dabei hinsichtlich des Wirkungsgrades eine Aufteilung des Kollektors in mehrere hintereinander angeordnete Kollektorstufen, die sich jeweils auf einem stufenweise abgesenkten Potential befinden, wie dies in der ersten eingangs genannten Druckschrift beschrieben ist. Problematisch ist dabei jedoch die Bereitstellung der verschiedenen benötigten Potentiale für eine derartige Elektronenstrahl-Vorrichtung.

### DARSTELLUNG DER ERFINDUNG

Es ist daher die Aufgabe der Erfindung, Elektronenstrahl-Vorrichtungen der eingangs genannten Art so weiterzuentwickeln, dass die notwendige Spannungsversorgung mit geringem Aufwand als kompakte, flexible und vielseitige Speisung realisiert werden kann.

Die Aufgabe wird bei einer Vorrichtung der eingangs genannten Art dadurch gelöst, dass
(f) die Speisung eine Hochspannungs-Gleichstromversorgung umfasst, welche aus einer Mehrzahl von gleichartigen Schaltstufen besteht, die jeweils als schaltbare Mittelspannungsquellen ausgebildet sind und mit ihren Ausgängen in Serie geschaltet sind;
(g) die abgestuften Potentiale der Kollektorstufen durch entsprechende Abgriffe zwischen den Schaltstufen der Hochspannungs-Gleichstromversorgung bereitgestellt werden;
(h) der negative Ausgang der Hochspannungs-Gleichstromversorgung sowohl mit der Kathode als auch mit der auf dem niedrigsten Potential liegenden Kollektorstufe verbunden ist;
(i) der positive Ausgang der Hochspannungs-Gleichstromversorgung auf einem gegenüber der Anode abgesenkten Referenzpotential gehalten wird; und
(k) die Potentialdifferenz zwischen dem Referenzpotential und der Anode durch eine weitere Gleichspannungsquelle erzeugt wird.

Der Kern der Erfindung besteht darin, als Speisung für die Kollektorstufen eine Serieschaltung von scbaltbaren Mittelspannungsquellen vorzusehen, die einerseits leicht in Halbleitertechnik ausgeführt werden können, und andererseits durch Abgriffe zwischen den Stufen auf einfache Weise die verschiedenen Potentiale bereitstellen. Darüber hinaus ermöglicht die Schaltbarkeit der einzelnen Stufen eine schnelle Abschaltung der gesamten Speisung im Notfall, ohne dass zusätzliche Crowbarschaltungen notwendig wären. Die Hochspannungsgleichstromversorgung und die weitere Gleichspannungsquelle sind in der Kathoden-Anodenstrecke in Serie geschaltet, um die Potentialdifferenz zwischen Kathode und Anode bereitzustellen.

Eine bevorzugte Ausführungsform der erfindungsgemässen Vorrichtung zeichnet sich dadurch aus, dass
(a) jede der Schaltstufen die Sekundärwicklung eines Netztransformators, einen daran angeschlossenen Schaltstufengleichrichter, nachfolgende Mittel zur Glättung der gleichgerichteten Spannung sowie wenigstens einen im Ausgang liegenden, von einer Stufensteuerung gesteuerten Schaltstufenschalter umfasst; und
(b) zwischen den Ausgängen der Schaltstufe jeweils eine in Sperrrichtung gepolte Kaskadendiode angeordnet ist.

Hierdurch wird eine Speisung verwirklicht, die sich in anderer Ausführung und Arbeitsweise bereits als Hochspannungs-Gleichstromversorgung für die Neutralteilcheninjektion bei Plasmaexperimenten (siehe dazu die EP-B1-O 134 505) und als Pulsstufenmodulator (PSM) in Rundfunksendern bewährt hat.

Weitere Ausführungsformen ergeben sich aus den Unteransprüchen.

### KURZE BESCHREIBUNG DER ZEICHNUNG

Die Erfindung soll nachfolgend anhand von Ausführungsbeispielen im Zusammenhang mit der Zeichnung näher erläutert werden. Es zeigen
- Fig. 1a,b: Schemaanordnungen der Elektroden mit ihren zugehörigen Spannungs- und Strom-Anschlusswerten für Gyrotronröhren nach dem Stand der Technik;
- Fig. 1c: eine Fig. 1a,b entsprechende Schemaanordnung für eine Gytronröhre mit 1-stufigem "depressed collector" nach dem Stand der Technik;
- Fig. 1d,e: Schemaanordnungen der Elektroden mit ihren zugehörigen Spannungs- und Strom-Anschlusswerten in zwei Anschlussvarianten für Gyrotronröhren mit mehrstufigem Kollektor, wie sie Gegenstand der Erfindung sind;
- Fig. 2: das Schaltschema eines Ausführungsbeispiels einer Vorrichtung nach der Erfindung mit einer aus in Serie liegenden Schaltstufen bestehenden Speisung für die Kollektorstufen; und
- Fig. 3: eine Ausführungsform der Speisung für die Kollektorstufen gemäss Fig. 3.

### WEGE ZUR AUSFÜHRUNG DER ERFINDUNG

Die Erfindung wird nachfolgend ohne Beschränkung der Allgemeinheit im Zusammenhang mit Gyrotrons erläutert. Sie ist jedoch generell anwendbar bei allen Vorrichtungen, in denen ein Hochleistung-Elektronenstrahl erzeugt, entlang einer Strahlachse geführt und in einem Kollektor wieder abgebremst und vernichtet wird. Sie ist damit anwendbar auch auf andere Hochleistungs-Mikrowellenröhren, insbesondere Klystrons und Freie-Elektronen-Laser FEL.

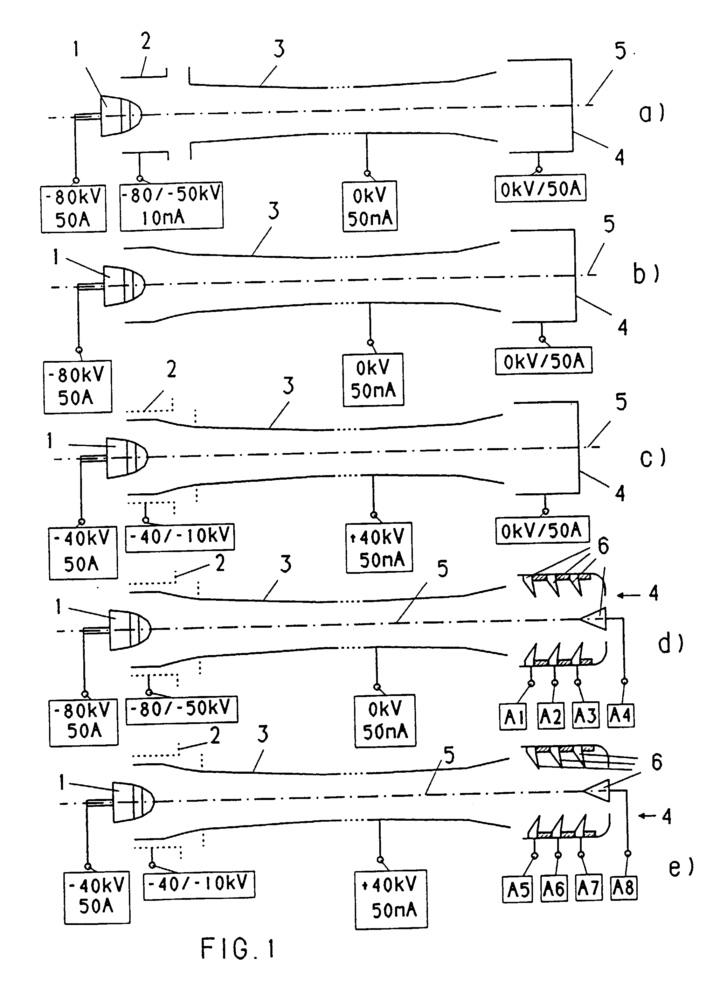

Bei einem Gyrotron der herkömmlichen Art sind, wie dies in der Schemaanordnung aus Fig. 1a oder 1b gezeigt ist, in einem evakuierten Raum entlang einer Strahlachse 5 hintereinander eine Kathode 1 (z.B. in Form einer Ringkathode), eine Anode 3 (als Hauptanode) und ein Kollektor 4 (als Elektronenauffänger) angeordnet. Anstelle einer bis zur Kathode 1 durchgehenden Anode 3 (Fig. 1b) kann die Anode 3 kathodenseitig verkürzt und durch eine separate Hilfsanode 2 (Fig. 1a) ergänzt sein. Beide Varianten sind auch in den weiteren Fig. 1c-e möglich und durch gestrichelte Linien angedeutet.

Beispielhafte Anschlusswerte, d.h. Spannungen und Ströme, der einzelnen Elektroden sind in den Figuren in zugehörigen Kästen angegeben: In Fig. 1a (mit der Hilfsanode 2 als Modulationsanode) liegt die Kathode 1 auf einem Potential von -80 kV bei einem Strom von 50 A, die Hilfsanode liegt umschaltbar auf Potentialen von -80 kV bzw. -50 kV (bei ca. 10 mA Strom), die Anode 3 liegt ebenso wie der Kollektor 4 auf dem Potential Null, wobei die Anode nur ca. 50 mA, der Kollektor dagegen 50 A Strom zieht. Beim Gyrotron ohne Hilfsanode gemäss Fig. 1b fehlt naturgemäss der Anschlusswert dieser Elektrode; die Anschlusswerte der übrigen Elektroden sind dagegen unverändert.

Bei der Gyrotron-Anordnung gemäss Fig. 1c, wie sie auch aus Fig. 11 der eingangs genannten Druckschrift bekannt ist, beträgt die Potentialdifferenz zwischen Kathode 1 und Anode 3 wiederum 80 kV. Der (1-stufige) Kollektor 4 befindet sich in diesem Fall jedoch nicht auf dem Anodenpotential, sondern liegt mit seinem Potential zwischen dem der Anode und der Kathode. Er bremst damit die Elektronen im Elektronenstrahl ab und wird wegen seiner Potentialabsenkung als "depressed collector" bezeichnet.

Eine beispielhafte Anordnung für ein Gyrotron gemäss der Erfindung ist in den Fig. 1d und 1e wiedergegeben, wobei sich die beiden Figuren (analog zu den Fig. 1a und 1c) lediglich durch unterschiedliche Anschlusswerte in den einzelnen Elektroden unterscheiden. Der Kollektor 4 ist hier nicht mehr 1-stufig, sondern umfasst mehrere (in diesem Fall 4) Kollektorstufen 6, die teilweise als Ringe, teilweise als ein kegelförmiger Auffänger ausgebildet sind. Die Kollektorstufen 6 haben im Fall der Fig. 1d die abgestuften Anschlusswerte A1, A2, A3 und A4, zu denen Potentiale von beispielsweise -40, -50, -60 und -80 kV und Ströme von 15, 20, 10 und 5 A gehören. Im Fall der Fig. 1e sind die entsprechenden abgestuften Anschlusswerte mit A5, A6, A7 und A8 bezeichnet und mit Potentialen von 0, -10, -20 und -40 kV und Strömen von wiederum 15, 20, 10 und 5 A verknüpft.

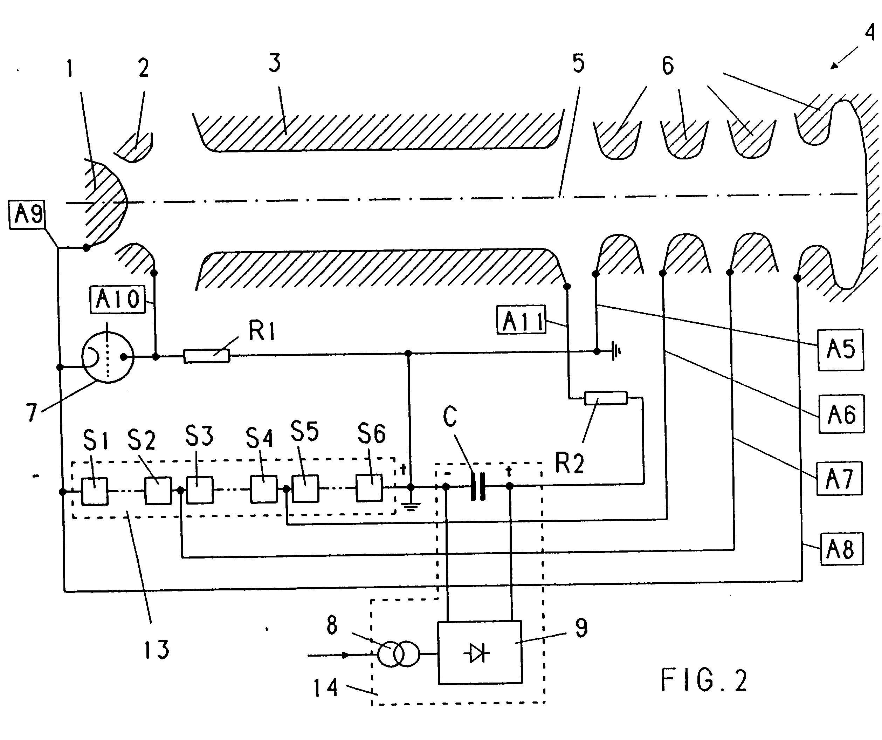

Ein bevorzugtes Ausführungsbeispiel der Erfindung in Form eines Gyrotrons gemäss Fig. 1e mit zugehöriger Speisung ist in der Fig. 2 dargestellt. Die Speisung für die Versorgung der Elektroden 1, 2, 3 und 4 (mit den Kollektorstufen 6) umfasst einerseits einen herkömmlichen Versorgungsteil 14, der aus einem an das Netz angeschlossenen Netztransformator 8, einem nachfolgenden Gleichrichter 9 und eine Kondensator C zur Glättung aufgebaut ist. Dieser herkömmliche Versorgungsteil 14 liefert eine konstante Gleichspannung, die zwischen der an Masse liegenden ersten der vier Kollektorstufen 6 (mit dem Anschlusswert A5) und der Anode 3 (Anschlusswert A11; z.B. +40 kV, 50 mA gemäss Fig. 1e) liegt und die Anode 3 gegenüber dem Kollektor 4 positiv vorspannt. Ein Widerstand R2 begrenzt dabei den Anodenstrom.

Andererseits umfasst die Speisung eine Hochspannungs-Gleichstromversorgung 13, welche aus einer Mehrzahl von gleichartigen Schaltstufen S1,..,S6 besteht, die jeweils als schaltbare Mittelspannungsquellen ausgebildet und mit ihren Ausgängen in Serie geschaltet sind. Diese Hochspannungs-Gleichstromversorgung 13 stellt die für die Kollektorstufen 6 benötigten abgestuften Potentiale durch ihre eigentlichen Ausgänge und entsprechende Abgriffe zwischen ihren Schaltstufen S1,..,S6 bereit. Der positive Ausgang der Hochspannungs-Gleichstromquelle 13 ist dabei mit dem an Masse als Referenzpotential liegenden negativen Ausgang des herkömmlichen Teils verbunden, der negative Ausgang der Hochspannungs-Gleichstromquelle 13 ist zugleich mit der Kathode 1 und der letzten der vier Kollektorstufen 6 verbunden (Anschlusswerte A9 entsprechend -40 kV, 50 A und A8 entsprechend -40 kV, 5 A).

Die dazwischenliegenden Anschlusswerte A6 und A7 (-10 kV, 20 A und -20 kV, 10 A) für die beiden mittleren der Kollektorstufen werden über zwei Abgriffe zur Verfügung gestellt, die innerhalb der Hochspannungs-Gleichstromversorgung 13 z.B. zwischen den Schaltstufen S2 und S3 bzw. S4 und S5 vorgesehen sind. Die Hilfsanode 2 wird über einen strombegrenzenden Widerstand R1 auf dem Referenzpotential (Masse) der ersten Kollektorstufe bzw. des positiven Ausgangs der Hochspannungs-Gleichstromversorgung 13 gehalten. Zusätzlich kann eine Schaltröhre 7 vorgesehen werden, welche beim Durchschalten das Potential der Hilfsanode 2 auf das Kathodenpotential zieht.

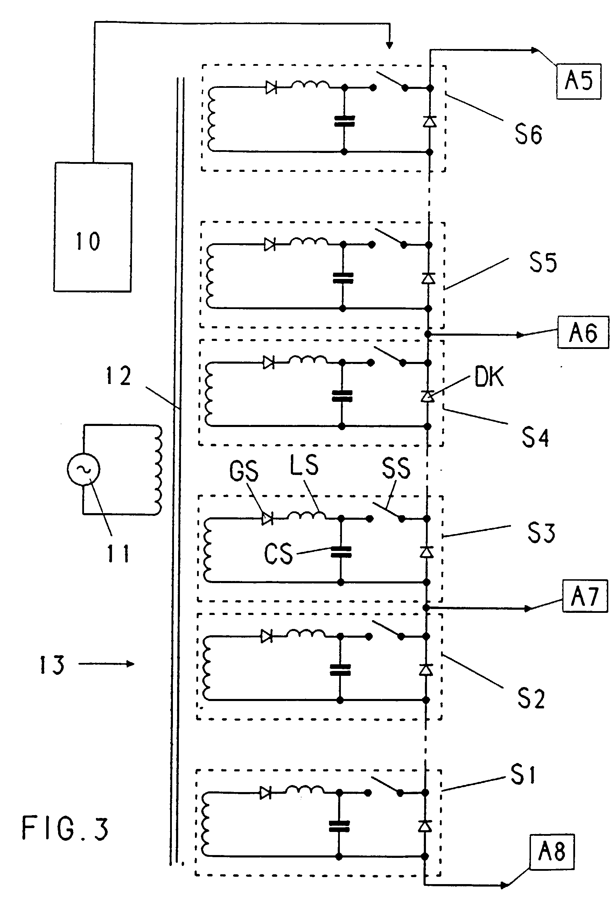

Die Hochspannungs-Gleichstromversorgung 13 stellt mit geringem schaltungstechnischen Aufwand die verschiedenen für den Stufenkollektor benötigten Potentiale (Anschlusswerte) zur Verfügung und kann im Bedarfsfall schnell ein- und ausgeschaltet werden, so dass sowohl zusätzliche Crowbarschaltungen als auch Modulationsröhren entfallen. Ein bevorzugtes Ausführungsbeispiel für den inneren Aufbau einer Hochspannungs-Gleichstromversorgung 13 nach Fig. 2 ist in Fig. 3 dargestellt: Die einzelnen Schaltstufen S1,..,S6 sind schaltbare Mittelspannungsquellen, die aus einer Wechselspannungsquelle 11 (dem Netz) über einen Netztransformator 12 mit einer Primärwicklung und einer Mehrzahl von Sekundärwicklungen versorgt werden.

Jede der gleichartigen Schaltstufen S1,..,S6 umfasst einen an die zugehörige Sekundärwicklung angeschlossenen Schaltstufengleichrichter GS, dem Mittel zur Glättung, beispielsweise eine in Serie liegende Schaltstufendrossel LS und ein parallel geschalteter Schaltstufenkondensator CS, nachgeordnet sind. In wenigstens einem der Gleichspannungsausgänge ist ein steuerbarer Schaltstufenschalter SS, vorzugsweise ein Leistungshalbleiter in Form eines GTO oder IGBT, vorgesehen. Die Gesamtheit der Schaltstufenschalter SS wird von einer Stufensteuerung 10 angesteuert.

Die einzelnen Schaltstufen S1,..,S6 sind mit ihren Gleichspannungsausgängen in Serie geschaltet, wobei zwischen den Ausgängen einer Schaltstufe jeweils eine in Sperrrichtung gepolte Kaskadendiode DK als Freilaufdiode angeordnet ist. Die Gleichspannungen der einzelnen Schaltstufen S1,..,S6 (z.B. 1-10 kV) addieren sich dann zu einer gesamten Ausgangsspannung (von z.B. 40 kV). Durch wahlweises Einschalten verschiedener Schaltstufen können verschiedene zeitlich sich ändernde Spannungen an den Ausgängen und Zwischenabgriffen vorgegeben werden. Ein sicheres Schnellabschalten wird dadurch erreicht, dass die Schaltstufenschalter SS in allen Schaltstufen S1,..,S6 von der Stufensteuerung 10 gleichzeitig geöffnet werden.

An dieser Stelle sei darauf hingewiesen, dass auf den Versorgungsteil 14 in Fig. 2 natürlich auch verzichtet werden kann. Der positive Ausgang der Hochspannungs-Gleichstromversorgung 13 ist dann direkt mit der Anode 3 verbunden und liegt gleichzeitig auf Erdpotential.

Insgesamt ergeben sich mit der Vorrichtung nach der Erfindung die folgenden Vorteile:
- zur sicheren Abschaltung im Notfall ist keine zusätzliche Crowbarschaltung notwendig;
- die Hochspannungs-Gleichstromversorgung erlaubt ein schnelles Zu- und Abschalten innerhalb von wenigen (≈ 20) µs;
- die Hochspannungs-Gleichstromversorgung kann wegen ihrer galvanischen Trennung potentialmässig floaten;
- der Wirkungsgrad der Vorrichtung ist sehr hoch;
- der schaltungstechnische Aufbau ist modular und vergleichsweise einfach.

### BEZEICHNUNGSLISTE

- 1: Kathode
- 2: Hilfsanode
- 3: Anode
- 4: Kollektor
- 5: Strahlachse
- 6: Kollektorstufe
- 7: Schaltröhre
- 8,12: Netztransformator
- 9: Gleichrichter
- 10: Stufensteuerung
- 11: Wechselspannungsquelle
- 13: Hochspannungs-Gleichstromversorgung
- 14: Versorgungsteil
- A1,..,A11: Anschlusswert
- C: Kondensator
- CS: Schaltstufenkondensator
- DK: Kaskadendiode
- GS: Schaltstufengleichrichter
- LS: Schaltstufendrossel
- R1,R2: Widerstand
- S1,..,S6: Schaltstufe
- SS: Schaltstufenschalter

## Patentansprüche

1. Elektronenstrahl-Vorrichtung, umfassend
(a) eine sich auf einem Kathodenpotential befindende Kathode (1), in welcher ein sich entlang einer Strahlachse (5) ausbreitender Hochleistungs-Elektronenstrahl erzeugt wird;
(b) eine in Richtung der Strahlachse (5) hinter der Kathode (1) angeordnete Anode (3), welche sich auf einem gegenüber dem Kathodenpotential erhöhten Anodenpotential befindet und die Elektronen des Elektronenstrahls beschleunigt;
(c) einen in Richtung der Strahlachse (5) hinter der Anode (3) angeordneten Kollektor (4) zur Abbremsung des Elektronenstrahls, welcher Kollektor (4) sich auf einem gegenüber dem Anodenpotential abgesenkten Kollektorpotential befindet;
(d) eine Speisung zur Bereitstellung der einzelnen Potentiale für die Kathode (1), Anode (3) und den Kollektor;
(e) wobei der Kollektor (4) mehrere in Richtung der Strahlachse hintereinander angeordnete Kollektorstufen (6) umfasst, welche sich jeweils auf einem stufenweise abgesenkten Potential befinden;
dadurch gekennzeichnet, dass
(f) die Speisung eine Hochspannungs-Gleichstromversorgung (13) umfasst, welche aus einer Mehrzahl von gleichartigen Schaltstufen (S1,..,S6) besteht, die jeweils als schaltbare Mittelspannungsquellen ausgebildet sind und mit ihren Ausgängen in Serie geschaltet sind;
(g) die abgestuften Potentiale der Kollektorstufen (6) durch entsprechende Abgriffe zwischen den Schaltstufen (S1,..,S6) der Hochspannungs-Gleichstromversorgung (13) bereitgestellt werden;
(h) der negative Ausgang der Hochspannungs-Gleichstromversorgung (13) sowohl mit der Kathode (1) als auch mit der auf dem niedrigsten Potential liegenden Kollektorstufe verbunden ist;
(i) der positive Ausgang der Hochspannungs-Gleichstromversorgung (13) auf einem gegenüber der Anode (3) abgesenkten Referenzpotential gehalten wird; und
(k) die Potentialdifferenz zwischen dem Referenzpotential und der Anode (3) durch eine weitere Gleichspannungsquelle (8, 9, C) erzeugt wird.

2. Vorrichtung nach Anspruch 1, dadurch gekennzeichnet, dass
(a) jede der Schaltstufen (S1,..,S6) die Sekundärwicklung eines Netztransformators (12), einen daran angeschlossenen Schaltstufengleichrichter (GS), nachfolgende Mittel (CS,LS) zur Glättung der gleichgerichteten Spannung sowie wenigstens einen im Ausgang liegenden, von einer Stufensteuerung (10) gesteuerten Schaltstufenschalter (SS) umfasst; und
(b) zwischen den Ausgängen jeder Schaltstufe (S1,..,S6) jeweils eine in Sperrrichtung gepolte Kaskadendiode (DK) angeordnet ist.

3. Vorrichtung nach Anspruch 2, dadurch gekennzeichnet, dass als Schaltstufenschalter (SS) abschaltbare Leistungshalbleiter-Bauelemente, insbesondere GTOs oder IGBTs, verwendet werden.

4. Vorrichtung nach einem der Ansprüche 1 bis 3, dadurch gekennzeichnet, dass
(a) der negative Ausgang der Hochspannungs-Gleichstromversorgung (13) sowohl mit der Kathode (1) als auch mit der auf dem niedrigsten Potential liegenden Kollektorstufe verbunden ist; und
(b) der positive Ausgang der Hochspannungs-Gleichstromversorgung (13) mit der Anode (3) verbunden und auf Erdpotential gehalten wird.

5. Vorrichtung nach einem der Ansprüche 1 bis 4, dadurch gekennzeichnet, dass die Hochspannungs-Gleichstromversorgung (13) eine maximale Ausgangsspannung von einigen 10 kV, vorzugsweise etwa 40 kV, aufweist.

6. Vorrichtung nach einem der Ansprüche 1 bis 5, dadurch gekennzeichnet, dass die Potentiale der Kollektorstufen (6) in ihrer Höhe zwischen dem Kathodenpotential und dem Anodenpotential liegen.

7. Vorrichtung nach einem der Ansprüche 1 bis 6, dadurch gekennzeichnet, dass die Vorrichtung ein Gyrotron, ein Klystron, ein Freie-Elektronen-Laser FEL, oder eine andere Hochleistungs-Mikrowellenröhre ist.

## Claims

1. An electron-beam device comprising
(a) a cathode (1) with a cathode potential in which a high-power electron beam is created which spreads along a beam axis (5);
(b) an anode (3) which is located in the direction of the beam axis (5) and behind the cathode (1), with an anode potential above the cathode potential, and which accelerates the electrons of the electron beam;
(c) a collector (4) located in the direction of the beam axis (5) and behind the anode for slowing down the electron beam, with a collector potential below the anode potential;
(d) a feed for supplying the individual potentials for the cathode (1), anode (3) and the collector;
(e) whereby the collector (4) comprises several collector levels (6) located in a row in the direction of the beam axis, each of which with a lower graduated potential;
characterized in that
(f) the feed comprises a high-tension direct current supply (13) comprising a number of identical switch levels (S1, ..., S6), each of which is designed to function as a switchable medium high voltage source and which are series-connected with their outputs;
(g) the graduated potentials of the collector levels (6) are provided by means of suitable pick-offs between the switch levels (S1, ..., S6) of the high-tension direct current supply (13);
(h) the negative output of the high-tension direct current supply (13) is connected to both the cathode (1) and the collector level on the lowest potential;
(i) the positive output of the high-tension direct current supply (13) is held on a reference potential below the anode (3); and
(k) the potential difference between the reference potential and the anode (3) is created by an additional high voltage source (8, 9, C).

2. A device as claimed in claim 1, characterized in that
(a) each of the switch levels (S1, ..., S6) comprises the secondary winding of a mains transformer (12), a connected switch level rectifier (GS), succeeding means (CS, LS) for smoothing the rectified voltage and at least one switch level switch (SS) located in the output and controlled by a level controller (10); and
(b) a cascade diode (DK) poled in the cutoff direction is located between the outputs of each switch level (S1, ..., S6).

3. A device as claimed in claim 2, characterized in that disconnectible power semiconductor components, especially GTOs or IGBTs, are used as the switch level switch (SS).

4. A device as claimed in any of claims 1 to 3, characterized in that
(a) the negative output of the high-tension direct current supply (13) is connected to both the cathode (1) and the collector level on the lowest potential; and
(b) the positive output of the high-tension direct current supply (13) is connected to the anode (3) and held to ground potential.

5. A device as claimed in any of claims 1 to 4, characterized in that the high-tension direct current supply (13) has a maximum output voltage of some 10 kV, preferably approximately 40 kV.

6. A device as claimed in any of claims 1 to 5, characterized in that the potentials of the collector levels (6) are between the cathode potential and the anode potential.

7. A device as claimed in any of claims 1 to 6, characterized in that the device is a gyrotron, a klystron, a free-electron laser FEL or another power microwave tube.

## Revendications

1. Dispositif d'émission d'un faisceau d'électrons comprenant
(a) une cathode (1) située sur un potentiel de cathode et dans laquelle est produit un faisceau d'électrons de grande puissance se propageant le long d'un axe de faisceau (5);
(b) une anode (3) située en direction de l'axe de faisceau (5) derrière la cathode (1), placée sur un potentiel d'anode surélevé par rapport au potentiel de cathode et accélérant les électrons du faisceau;
(c) un collecteur (4) disposé en direction de l'axe de faisceau (5) derrière l'anode (3) et destiné à la modération du faisceau d'électrons, ce collecteur (4) se trouvant sur un potentiel de collecteur surbaissé par rapport au potentiel d'anode;
(d) une alimentation destinée à la mise à disponibilité des potentiels respectifs de la cathode (1), de l'anode (3) et du collecteur (4);
(e) le collecteur (4) comprenant plusieurs niveaux (6) disposés les uns derrière les autres en direction de l'axe de faisceau et situés chacun sur un potentiel surbaissé par paliers:
caractérisé en ce que
(f) l'alimentation comprend un circuit de courant continu à haute tension (13) se composant d'une pluralité de gradins similaires (S1,...,S6), tous les gradins étant formés comme des sources moyenne tension commutables et montés en série avec leurs sorties;
(g) les potentiels gradués des niveaux de collecteur (6) sont mis à disposition par des prises correspondantes entre les gradins (S1,...,S6) du circuit de courant continu à haute tension (13);
(h) la sortie négative du circuit de courant continu à haute tension (13) est reliée aussi bien avec la cathode (1) qu'avec le palier de collecteur placé sur le potentiel le plus bas;
(i) la sortie positive du circuit de courant continu à haute tension (13) est maintenue sur un potentiel de référence surbaissé par rapport à l'anode (3); et
(j) la différence de potentiel entre le potentiel de référence et l'anode (3) est produite au moyen d'une source de tension continue (8, 9, C).

2. Dispositif selon la revendication 1 caractérisé en ce que
(a) chaque gradin (S1,...,S6) comprend l'enroulement secondaire d'un transformateur de réseau (12), un redresseur de gradins (GS) y étant raccordé, des moyens consécutifs (CS, LS) pour le lissage de la tension redressée ainsi qu'au moins un commutateur de gradins (SS) placé dans la sortie et commandé par une distribution à étages (10); et
(b) des diodes en cascade (DK) polarisées dans la direction de verrouillage sont disposées entre les sorties de chaque gradin (S1,...,S6).

3. Dispositif selon la revendication 2 caractérisé en ce qu'on utilise des composants de semiconducteurs de puissance, notamment des thyristors blocables ou des thyristors bidirectionnels à grille isolée (IGBT), comme commutateur de gradins (SS).

4. Dispositif selon l'une des revendications 1 à 3
caractérisé en ce que
(a) la sortie négative du circuit de courant continu à haute tension (13) est reliée aussi bien avec la cathode (1) qu'avec le palier de collecteur placé sur le potentiel le plus bas; et
(b) la sortie positive du circuit de courant continu à haute tension (13) est reliée avec l'anode (3) et est maintenue sur le potentiel de la terre.

5. Dispositif selon l'une des revendications 1 à 4 caractérisé en ce que le circuit de courant continu à haute tension (13) a une tension maximale de sortie de plusieurs dizaines de kV, de préférence d'environ 40 kV.

6. Dispositif selon l'une des revendications 1 à 5 caractérisé en ce que les potentiels des niveaux de collecteur (6) sont placés dans leur hauteur entre le potentiel de cathode et le potentiel d'anode.

7. Dispositif selon l'une des revendications 1 à 6 caractérisé en ce que le dispositif est un gyrotron, un klystron, un laser à électrons libres (FEL) ou un autre tube pour hyperfréquences à haute puissance.
